# EUROPÄISCHE PATENTSCHRIFT

(11) **EP 4 284 952 B1**
(45) Veröffentlichungstag und Bekanntmachung des Hinweises auf die Patenterteilung: **20.11.2024**
(21) Anmeldenummer: 22702646.5
(22) Anmeldetag: 20.01.2022
(51) Int. Cl.: C14B 7/04, A01G 9/029, C08H 1/06

(54) **VERBUNDMATERIAL ALS BIOLOGISCH ABBAUBARE ZUSAMMENSETZUNG UND DESSEN VERWENDUNG UND HERSTELLUNG**
COMPOSITE MATERIAL AS A BIODEGRADABLE COMPOSITION, AND ITS USE AND PRODUCTION
MATÉRIAU COMPOSITE COMME COMPOSITION BIODÉGRADABLE, ET SON UTILISATION ET SA PRODUCTION

(30) Priorität: 26.01.2021 DE 102021101649
(43) Veröffentlichungstag der Anmeldung: 06.12.2023
(73) Patentinhaber: Bader GmbH & Co. KG, 73033 Göppingen (DE)
(72) Erfinder: HELFERSDORFER, Kai, 73107 Eschenbach (DE); FÖRSTER, Egon, 76744 Wörth am Rhein (DE)
(74) Vertreter: Pfiz/Gauss Patentanwälte PartmbB
(86) Internationale Anmeldenummer: PCT/EP2022/051261
(87) Internationale Veröffentlichungsnummer: WO 2022/161854

(56) Entgegenhaltungen:
- GB-A- 1 464 915
- US-A- 4 497 871
- US-B1- 10 124 543

## Beschreibung

Die Erfindung betrifft einen Verbundkörper auf Basis von tierischen und pflanzlichen Fasern und eines Bindemittels. Die Erfindung betrifft weiter eine Verwendung und ein Herstellungsverfahren für einen Verbundkörper.

Im Zuge der industriellen Lederherstellung werden die Tierhäute in einem der Verfahrensschritte gefalzt, d. h. mittels einer Spiralmesserwalze auf eine gleichmäßige Dicke rückseitig abgehobelt. Das abgehobelte Material sind die so genannten Falzspäne, die in einer Menge von etwa ein Drittel des Hautgewichts anfallen. Häufig werden solche Falzspäne als Abfälle auf Deponien verbracht. Dabei sind die Verwertungs- und Entsorgungswege ungewiss und mit Kosten verbunden.

In diesem Zusammenhang ist es aus der DE-A 103 20 061 bekannt, einen nicht klebrigen, verrottungsfesten Werkstoff unter Verwendung von Lederabfällen herzustellen, indem dem Ledermahlgut kollagenhaltige, erforderlichenfalls die Klebrigkeit und/oder die Verrottung verhindernde Mittel zugemischt werden. Die so erhalte Mischung wird unter Druckeinwirkung und bei erhöhter Temperatur zu einer thermoplastisch verformbaren Masse umgeformt, die zu Halbzeug verarbeitet oder durch Einpressen in ein entsprechendes Formwerkzeug zu einem dreidimensionalen Formteil geformt werden kann.

Nach der GB 1 464 915 A umfasst ein Pflanzbehälter einen wasserunlöslichen Mantel und ein davon umhülltes Kernbauteil, wobei das Kernbauteil aus einem wasserlöslichen filmbildenden Proteinmaterial, Kohlehydrat bzw. Glyzerin, Phosphatsalz und Fasermaterial besteht. Das Proteinmaterial soll im Boden in Stickstoffverbindungen umgewandelt werden, während ein geringer Anteil an Fasermaterial zur Verstärkung und Formstabilität dient. Das Proteinmaterial kann zwar als Nährstoffquelle dienen, liefert aber aufgrund seiner Wasserlöslichkeit nicht die erforderliche Formteilstabilität. Um dies auszugleichen, ist eine Einkapselung in der zerbrechbaren wasserdichten Hülle vorgesehen, die aber sowohl den Herstellungsaufwand erhöht als auch den Gebrauch erschwert oder beeinträchtigt.

US 4 497 871 A beschreibt ein Kunstleder in einer bahnförmigen Lagenstruktur aus separat gefertigtem Gittergewebe und einer Ledermaterialfolie.

Ausgehend hiervon besteht die Aufgabe der vorliegenden Erfindung darin, die bei der Lederherstellung und -verarbeitung anfallenden Lederabfälle als Bestandteil eines nur zeitweise formbeständigen Substrats weiter nutzbar zu machen und entsprechende Verwendungen und Herstellungsverfahren anzugeben.

Zur Lösung werden die in den unabhängigen Patentansprüchen angegebenen Merkmalskombinationen vorgeschlagen. Vorteilhafte Ausgestaltungen und Weiterbildungen der Erfindung ergeben sich aus den abhängigen Ansprüchen.

Die Erfindung geht vor allem von dem Gedanken aus, einen schadstofffrei verrottbaren bzw. kompostierbaren Werkstoff für vielfältig einsetzbare Formkörper mit neuartigen Eigenschaften zu schaffen. Dementsprechend wird erfindungsgemäß ein Verbundkörper ausgebildet als als Pflanztopf, Setzkasten oder Schale in Form einer biologisch abbaubaren Zusammensetzung vorgeschlagen, wobei zumindest die folgenden Bestandteile vorgesehen sind:
- Lederfasern vorzugsweise in Form von chromfreien Lederfalzspänen,
- Verstärkungsfasern aus einem natürlichen Fasermaterial zur Stabilisierung und Aussteifung der Lederfasern,
- Bindemittel zur Verbindung und Fixierung der Leder- und Verstärkungsfasern in einer Verbundstruktur in gewünschter geometrischer Form,
- Wachs zur Umhüllung der Verbundstruktur.

Die Lederfasern lassen sich als weiche Fasern mit Helix-förmigem Proteinaufbau schnell verrotten und insbesondere im Erdreich unter Zersetzung durch Bakterien und Pilze als wertvoller Bestandteil zusätzlich nutzen. Hierfür kommen vorzugsweise chromfreie Lederfalzspäne zum Einsatz. Die Verstärkungsfasern sorgen für Stabilisation und Versteifung der Lederfalzspäne in der gewünschten Geometrie des Substrats. Dabei handelt es sich um natürliche anisotrope Fasern, die aufgrund ihrer pflanzlichen Herkunft eine komplette Zersetzung gewährleisten können. Das Bindemittel sorgt für einen formbeständigen Werkstoff nach der Herstellung bis zum Zersetzungsprozess. Das Wachs umschließt die Fasern bei der Herstellung, behindert die Wasseraufnahme und sorgt für eine gewünschte Verzögerung des Zersetzungsprozesses. Auf diese Weise wird ein Werkstoff geschaffen, der sich besonders zur Bildung von Formkörpern für den Einsatz in Biomassen bzw. im Erdreich eignet und dabei ökologisch besonders verträglich ist.

Vorteilhafterweise sind die Verstärkungsfasern aus einem pflanzlichen Material, insbesondere aus Hanf, Gras, Stroh, Miscanthus oder Wasserpest gebildet, so dass eine hohe Strukturfestigkeit und zugleich eine vollständige biologische Abbaubarkeit sichergestellt ist.

Eine weitere vorteilhafte Ausführung sieht vor, dass das Bindemittel als mineralischer Binder, im besten Fall als Stärkeester Basis ausgebildet ist. Ein solcher Binder wird beim Erwärmen weich und thermoplastisch, während nach dem Abkühlen eine Fixierung der Fasern erreicht wird. Die Zersetzung erfolgt schließlich in wertvolle mineralische Rückstände.

Vorteilhafterweise wird das Wachs unter Bindung von CO₂ vorzugsweise als Fischer-Tropsch-Wachs synthetisiert. Alternativ ist es auch möglich, dass das Wachs biologischen Ursprungs ist.

Eine besonders bevorzugte Ausgestaltung sieht vor, dass ein Verbundkörper aus dem erfindungsgemäßen Verbundmaterial als Formteil ausgebildet wird. Dabei können auch variierende Wandstärken vorgesehen sein, bspw. kann der Boden eines Gebildes dicker als der Rest dimensioniert sein.

Eine weitere Verbesserung sieht vor, dass das Formteil als Pflanztopf, Setzkasten, Schale, Pflanzenbeschilderung oder als Urne für Mensch oder Tier ausgebildet ist. Dadurch lässt sich ein Nutzen als Funktionsteil erreichen, das sich nach einer Nutzungsdauer durch Verrottung selbständig auflöst.

In diesem Zusammenhang ist es Verwendung eines Verbundkörpers als Dünger in einem natürlichen Zersetzungsprozess besonders vorteilhaft. Dabei sind es besonders die Lederfalzspäne, die durch den Zersetzungsprozess düngende Eigenschaften aufweisen bzw. als Dünger fungieren.

Günstig ist es hierbei, dass durch die Zersetzung des Verbundmaterials oder Verbundkörpers das Erdreich oder Pflanzen mit einer Verbindung enthaltend Stickstoff, Kohlendioxid, Phosphor und/oder Kalium gedüngt wird.

Vorteilhafterweise wird durch die Vorgabe des Anteils an Wachs in der Zusammensetzung der zeitliche Verlauf des Zersetzungsprozesses bestimmt. Ein höherer Wachsanteil sorgt dafür, dass der Prozess der Verrottung verlangsamt wird.

In verfahrensmäßiger Hinsicht wird die eingangs genannte Aufgabe dadurch gelöst, dass die einzelnen Bestandteile vorgemischt, in eine Form eingeblasen und untereinander durch Wärmezufuhr und gegebenenfalls Verpressen miteinander verbunden werden.

Der Verfahrensablauf erlaubt es auch, dass durch die Vorgabe eines Pressdrucks die Stabilität und oder die Zersetzung des Verbundmaterials oder Verbundkörpers beeinflusst wird.

Im Folgenden wird die Erfindung anhand eines in der Zeichnung in schematischer Weise dargestellten Ausführungsbeispiels näher erläutert. Es zeigen:
- Fig. 1: einen Pflanztopf als Formteil bzw. Verbundkörper aus einem Verbundmaterial in einem Vertikalschnitt;
- Fig. 2: einen Ausschnitt der Fig. 1 zur Veranschaulichung der Bestandteile des Verbundmaterials;
- Fig. 3: ein Schaubild einer Anlage zur Herstellung eines Formteils nach Fig. 1.

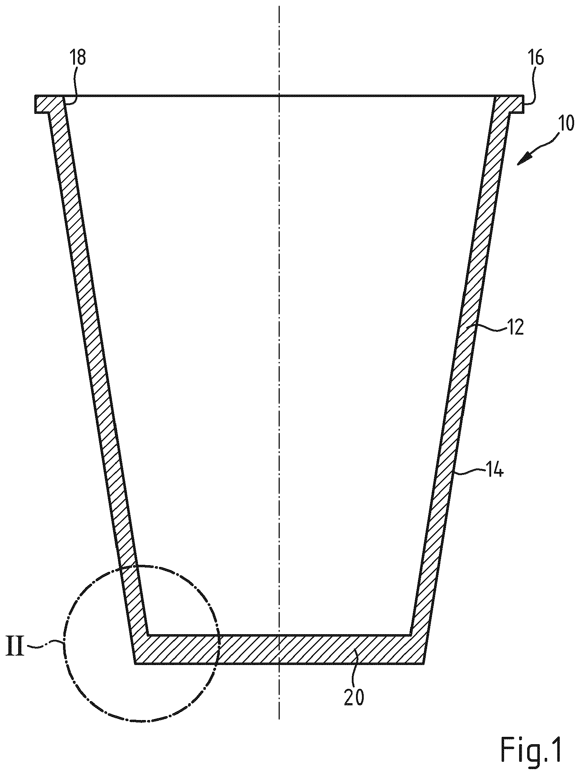

Fig. 1 zeigt einen Pflanztopf 10 als dreidimensionales Formteil aus einem Verbundmaterial 12, das eine hinreichende anfängliche Formbeständigkeit zur Aufnahme und Lagerung einer im Erdreich einzusetzenden Pflanze besitzt und auf einer biologisch abbaubaren bzw. im Erdboden durch Mikroorganismen verrottbaren Zusammensetzung basiert.

Der Pflanztopf 10 weist einen kegelstumpfförmigen Mantel 14 mit radial abstehendem Ringbund 16 an der großen oberen Öffnung 18 und einen scheibenförmigen Boden 20 auf. Diese Formelemente sind einheitlich aus dem Verbundmaterial 12 gebildet, wobei ggf. der Boden 20 dicker als der restliche Körper dimensioniert sein kann.

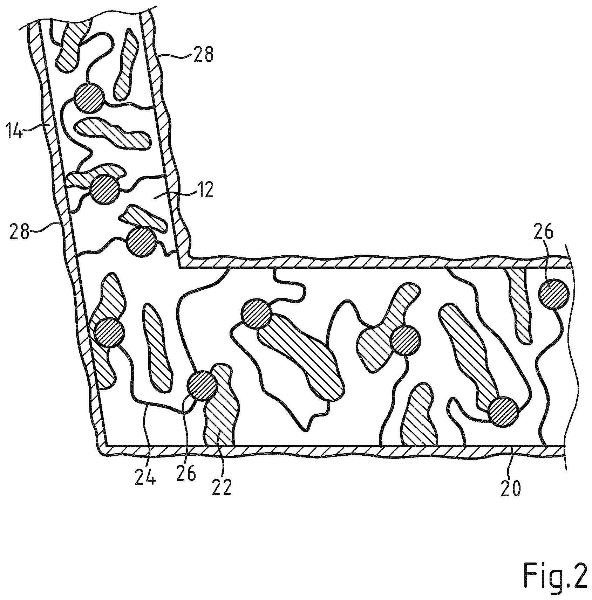

Wie in Fig. 2 illustriert, umfasst das Verbundmaterial 12 eine Faserstruktur aus Lederfasern 22 und Verstärkungsfasern 24, die durch ein Bindemittel 26 miteinander verbunden und fixiert sind und durch ein Wachs 28 umhüllt sind. Die einzelnen Bestandteile bzw. Komponenten lassen sich wie nachstehend beschrieben gewinnen bzw. bereitstellen:
Die Lederfasern 22 können als Falzspäne durch Abfalzen einer Lederhaut eine Weiterverwendung finden. Hierbei wird die Lederhaut im Zuge von deren Herstellung als Primärprodukt haltbar gemacht und durch Messer auf eine gewünschte Dicke heruntergefalzt. Die Falzspäne als Abfallprodukt werden mit einer bevorzugten Feuchtigkeit zwischen 10 und 45 % weiterverarbeitet und können homogen in einer Faserlänge zwischen 0,1 und 100 mm oder inhomogen vorliegen.

Die Verstärkungsfasern 24 sind faserige Strukturen aus einem pflanzlichen Naturmaterial, welches dem Fertigprodukt eine gewünschte Festigkeit geben und äußere Krafteinwirkungen aufnehmen kann. Die Verstärkungsfasern 24 lassen sich beispielhaft aus Hanf gewinnen. Dieser kann als Nutzhanf auf einem Hanffeld angebaut und nach einer definierten Zeit geerntet werden.

Sodann lassen sich Faserbündel aus der äußeren Schicht des Hanfstängels gewinnen. Durch Walzen der Hanfstängel werden die Faserbündel separiert und anschließend getrocknet, wobei sowohl kurz- aus auch längerfaserige Faserbündel verarbeitet werden können. Letztere werden vor der Vermengung aufgerissen, um einfacher dosiert werden zu können.

Das Bindemittel 26 kann je nach Einsatz und gewünschter Stabilität angepasst werden, wobei ein Binder in Form eines Stärke-Stearinsäureesters bevorzugt wird. Dieser ist aufschmelzfähig sowie nicht wasserlöslich und zersetzt sich im Erdreich zu 100 % in mineralische Substanzen. Mit einem Anteil von 2 - 20 % steuert der Binder 26 die Festigkeit und Stabilität des Formteils 10.

Ähnliche Vorteile und Möglichkeiten des Einsatzes als Binder 26 bietet ein biologisch abbaubares Schmelzklebepulver, das auf einem aliphatisch-aromatischen Co-Polyester basiert und unter der Marke "Ecoflex" als sog. "Hot-Melt Powder" von der Firma BASF bspw. über den Lieferanten Abifor erhältlich ist.

Das Wachs 28 kann ein biologisches Wachs sein, bevorzugt wird jedoch Wachs auf Basis von Kohlendioxid (CO₂). Zu dessen Herstellung wird in einem ersten Schritt in einem Reaktor Synthesegas bspw. aus Wasserstoff und CO₂ erzeugt. Im zweiten Schritt wird das Synthesegas über die Fischer-Tropsch Synthese in synthetische Kraftstoffe (sog. e-fuels) umgewandelt. Als weiteres chemisches Wertprodukt entsteht dabei das eingesetzte Fischer-Tropsch-Wachs 28, welches bei der Zersetzung CO₂ an die Pflanze wieder abgibt.

Ähnliche vorteilhafte Eigenschaften sowie Möglichkeiten zur Verarbeitung und Handhabung besitzt ein Wachs, das als Zuckerrohrwachs in Granulatform unter der Bezeichnung "Deurex X 52 G" oder als wässrige Wachs-Emulsion unter der Bezeichnung "Deurex X 5201W" von der Firma Deurex AG erhältlich ist.

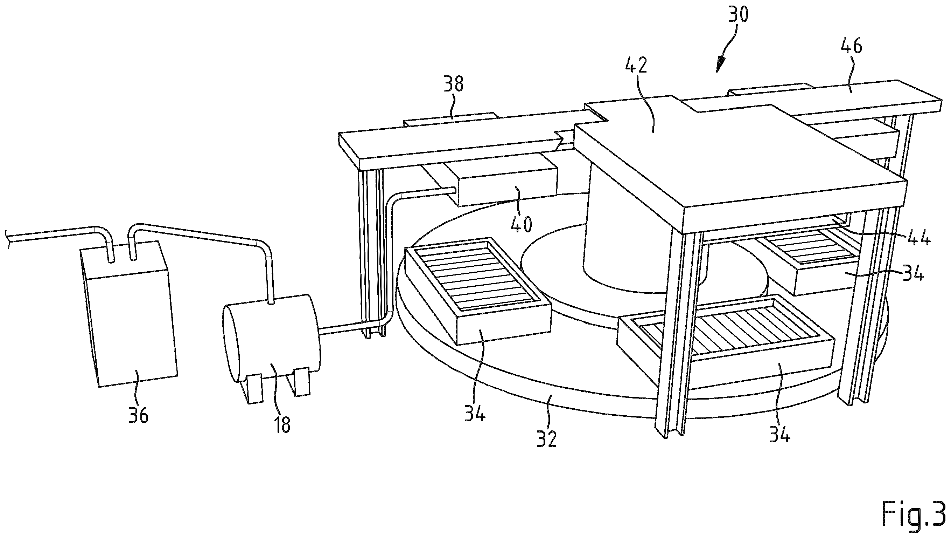

Fig. 3 illustriert eine Anlage 30 zur Herstellung von erfindungsgemäßen Formteilen, bspw. Pflanztöpfen 10. Die Anlage 30 umfasst einen um eine Hochachse rotierbaren Drehteller 32, auf dem untere Formwerkzeughälften 34 zu verschiedenen Stationen bewegbar sind. Ausgehend von einer Mischkammer 36, in der die Faserbestandteile 22, 24 vorgemischt werden, wird das Gemisch über eine Blasmaschine 38 unter Einbringung von Binder 26 und Wachs 28 in eine Füllstation 38 eingeblasen. Dort kann zur Vorbestückung eine obere Füllschale 40 auf die untere Formwerkzeughälfte 34 abgesenkt werden. Anschlie-ßen wird die bestückte Formwerkzeughälfte 34 zu einer Heiz- und Pressstation 42 transportiert, in der ein heizbarer Formstempel 44 als Oberform nach unten verfahrbar ist. Die Innenwände der Oberform und der unteren Formwerkzeughälfte 34 bestimmen die spätere Außenkontur der Pflanztöpfe 10, die zweckmäßig vielfach in einem Formwerkzeug gemeinsam ausgeformt werden. Sodann kann die Formwerkzeughälfte 34 zu einer Kühlstation 46 gedreht werden. Nach dem Abkühlen lassen sich die in der Formwerkzeughälfte 34 befindlichen ausgeformten Pflanztöpfe 10 über eine Entnahmevorrichtung aus der Anlage 30 entnehmen.

Der Faseranteil an der Gesamtmenge kann je nach den gewünschten Eigenschaften vorbestimmt werden. Hierbei liegen die Verstärkungsfasern im Bereich von 10 - 60 % und die Lederfasern im Bereich von 10 - 80%. Der Binder 26 sollte in einem feinen einer Körnung von 100 - 500 µm oberflächenrau optimiert vorliegen, um eine saubere und gleichmäßige Vermengung zu erhalten. Durch das Wachs 28 kann die spätere Zersetzung bzw. Verrottung gesteuert werden/beeinflusst werden. In einem Verhältnis von 5 - 25 % verlängert das Wachs die Zersetzung um Tage bis Monate.

Durch die Einblastechnologie kann ein dreidimensionaler Formkörper mit unterschiedlichen Wandstärken gefertigt werden. Somit kann der Boden 20 für eine bessere Stabilität und eine Absenkung des Schwerpunktes mit einer grö-ßeren Wandung hergestellt werden als der Mantel 14.

Um das Endprodukt zu schützen, kann der Pflanztopf in einem Folgeprozess mit Wachs komplett ummantelt werden. Hierbei wirkt das Wachs durch die komplette Ummantelung als Schutzschicht vor frühzeitiger Zersetzung und Feuchtigkeitsaufnahme.

Beim späteren Einsetzen in das Erdreich fungieren die Naturfasern, besonders die Lederfalzspäne, durch den Zersetzungsprozess als Dünger.

## Patentansprüche

1. Verbundkörper (10) ausgebildet als Pflanztopf, Setzkasten oder Schale aus einem Verbundmaterial (12) als biologisch abbaubare Zusammensetzung, umfassend zumindest die folgenden Bestandteile:
- Lederfasern (22) vorzugsweise in Form von chromfreien Lederfalzspänen,
- Verstärkungsfasern (24) aus einem natürlichen Fasermaterial zur Stabilisierung und Aussteifung der Lederfasern (22),
- Bindemittel (26) zur Verbindung und Fixierung der Leder- und Verstärkungsfasern (24) in einer Verbundstruktur,
- Wachs (28) zur Umhüllung der Verbundstruktur.

2. Verbundkörper (10) nach Anspruch 1, **dadurch gekennzeichnet, dass** die Verstärkungsfasern (24) aus einem pflanzlichen Material, insbesondere aus Hanf, Gras, Stroh, Miscanthus oder Wasserpest gebildet sind.

3. Verbundkörper (10) nach Anspruch 1 oder 2, **dadurch gekennzeichnet, dass** das Bindemittel (26) als mineralischer Binder, insbesondere auf einer Stärkeester-Basis ausgebildet ist.

4. Verbundkörper (10) einem der Ansprüche 1 bis 3, **dadurch gekennzeichnet, dass** das Wachs (28) unter Bindung von CO₂ synthetisiert ist.

5. Verbundkörper (10) einem der Ansprüche 1 bis 3, **dadurch gekennzeichnet, dass** das Wachs (28) biologischen Ursprungs ist.

6. Verwendung eines Verbundkörpers (10) nach einem der Ansprüche 1 bis 5 in einem natürlichen Zersetzungsprozess als Dünger.

7. Verwendung nach Anspruch 6, **dadurch gekennzeichnet, dass** durch die Zersetzung des Verbundkörpers (10) das Erdreich oder Pflanzen mit einer Verbindung enthaltend Stickstoff, Kohlendioxid, Phosphor und/oder Kalium gedüngt wird

8. Verwendung nach Anspruch 6 oder 7, **dadurch gekennzeichnet, dass** durch die Vorgabe des Anteils an Wachs (28) der zeitliche Verlauf des Zersetzungsprozesses bestimmt wird.

9. Verfahren zur Herstellung eines Verbundkörpers (10) nach einem der vorhergehenden Ansprüche bei welchem die einzelnen Bestandteile vorgemischt, in ein Formwerkzeug (34) eingebracht und untereinander durch Wärmezufuhr und gegebenenfalls Verpressen miteinander verbunden werden.

10. Verfahren nach Anspruch 9, **dadurch gekennzeichnet, dass** durch die Vorgabe eines Pressdrucks die Stabilität und/oder die Zersetzung des Verbundkörpers (10) beeinflusst wird.

11. Verfahren nach Anspruch 9 oder 10, **dadurch gekennzeichnet, dass** der Verbundkörper (10) mit dem Wachs (28) innerlich ausgestattet wird und/oder mit dem Wachs (28) außenwirkend ummantelt wird.

## Claims

1. Composite body (10) designed as a plant pot, seed tray or planter made of a composite material (12) in the form of a biodegradable composition, comprising at least the following components:
- leather fibers (22), preferably in the form of chrome-free leather shavings,
- reinforcing fibers (24) made of a natural fiber material to stabilize and reinforce the leather fibers (22),
- a binding agent (26) for binding and fixing the leather and reinforcing fibers (24) in a composite structure,
- wax (28) for coating the composite structure.

2. Composite body (10) according to claim 1, **characterized in that** the reinforcing fibers (24) are made of a plant material, in particular hemp, grass, straw, miscanthus or waterweed.

3. Composite body (10) according to either claim 1 or claim 2,
**characterized in that** the binding agent (26) is designed as a mineral binder, in particular based on a starch ester.

4. Composite body (10) according to any of claims 1 to 3,
**characterized in that** the wax (28) is synthesized by binding CO₂.

5. Composite body (10) according to any of claims 1 to 3,
**characterized in that** the wax (28) is of biological origin.

6. Use of a composite body (10) according to any of claims 1 to 5 in a natural decomposition process as a fertilizer.

7. Use according to claim 6, **characterized in that** the decomposition of the composite body (10) fertilizes the soil or plants with a compound containing nitrogen, carbon dioxide, phosphorus and/or potassium

8. Use according to either claim 6 or claim 7, **characterized in that** the temporal progression of the decomposition process is determined by specifying the proportion of wax (28).

9. Method for producing a composite body (10) according to any of the preceding claims, wherein the individual components are premixed, introduced into a mold (34), and bonded to one another by applying heat and, if necessary, pressing.

10. Method according to claim 9, **characterized in that** the stability and/or decomposition of the composite body (10) is influenced by specifying a pressing pressure.

11. Method according to either claim 9 or claim 10, **characterized in that** the composite body (10) is provided with the wax (28) internally and/or is coated with the wax (28) externally.

## Revendications

1. Corps composite (10) réalisé sous la forme d'un pot à plante, d'une jardinière ou d'une coupe en un matériau composite (12) en tant que composition biodégradable, comprenant au moins les composants suivants :
- fibres de cuir (22), de préférence sous la forme de copeaux de cuir plié exempts de chrome,
- fibres de renforcement (24) en un matériau fibreux naturel, destinées à la stabilisation et au raidissement des fibres de cuir (22),
- liant (26) permettant de lier et fixer les fibres de cuir et de renforcement (24) dans une structure composite,
- cire (28) permettant d'enrober la structure composite.

2. Corps composite (10) selon la revendication 1, **caractérisé en ce que** les fibres de renforcement (24) sont formées d'un matériau végétal, en particulier de chanvre, herbe, paille, miscanthus ou élodée.

3. Corps composite (10) selon la revendication 1 ou 2,
**caractérisé en ce que** le liant (26) est réalisé sous la forme d'un liant minéral, en particulier à base d'ester d'amidon.

4. Corps composite (10) selon l'une des revendications 1 à 3,
**caractérisé en ce que** la cire (28) est synthétisée par liaison de CO₂.

5. Corps composite (10) selon l'une des revendications 1 à 3,
**caractérisé en ce que** la cire (28) est d'origine biologique.

6. Utilisation d'un corps composite (10) selon l'une des revendications 1 à 5 en tant qu'engrais dans un processus de décomposition naturelle.

7. Utilisation selon la revendication 6, **caractérisée en ce que** la décomposition du corps composite (10) fertilise la terre ou les plantes avec un composé contenant de l'azote, du dioxyde de carbone, du phosphore et/ou du potassium

8. Utilisation selon la revendication 6 ou 7, **caractérisée en ce que** le déroulement temporel du processus de décomposition est déterminé par la spécification de la proportion de cire (28).

9. Procédé de fabrication d'un corps composite (10) selon l'une des revendications précédentes dans lequel les différents composants sont prémélangés, introduits dans un outil de formage (34) et reliés entre eux par apport de chaleur et éventuellement par pressage.

10. Procédé selon la revendication 9, **caractérisé en ce que** la stabilité et/ou la décomposition du corps composite (10) est influencée par la spécification d'une pression de pressage.

11. Procédé selon la revendication 9 ou 10, **caractérisé en ce que** le corps composite (10) est doté intérieurement de la cire (28) et/ou est enveloppé extérieurement par la cire (28).
